# EUROPÄISCHE PATENTANMELDUNG

(11) **EP 2 189 671 A1**
(43) Veröffentlichungstag der Anmeldung: **26.05.2010**
(21) Anmeldenummer: 08405286.9
(22) Anmeldetag: 21.11.2008
(51) Int. Cl.: F16C 29/04, F16C 29/00

(54) **Linearführung**

(71) Anmelder: Güdel Group AG, 4900 Langenthal (CH)
(72) Erfinder: Fleisch, Christian, 3415 Rüegsauschachen (CH); Zulauf, Walter, 4932 Gutenburg (CH)
(74) Vertreter: Rüfenacht, Philipp Michael

(57) **Zusammenfassung**

Eine Linearführung (1) umfasst eine Flachschiene (100) und einen Rollenbock (200), wobei der Rollenbock (200) und die Flachschiene (100) relativ zueinander in Schienenlängsrichtung verschiebbar sind. Der Rollenbock (200) umfasst eine Trageinrichtung (230) für eine Hauptlast, welche über eine Drehachse beweglich gelagert ist. Dazu ist die Drehachse rechtwinklig zur Laufrichtung und parallel zur Lauffläche (101) ausgerichtet. So werden Pendelbewegungen der Hauptlast ermöglicht, durch welche wellenförmige Deformationen in Schienenlängsrichtung, insbesondere bei Schienen mit grossen Spannweiten ausgeglichen werden können. Damit wird eine gleichmässige Kräfteverteilung auf die Rollen (211.1...211.4) erreicht und bei einem Lastentransport über mehrere Rollenböcke (200) einem Verkannten des Rollenbockes (200) entgegengewirkt, so dass ein reibungsarmer Betrieb und eine präzise Positionierung gewährleistet sind.

## Beschreibung

### Technisches Gebiet

Die Erfindung betrifft eine Linearführung mit einer Flachschiene und einem Rollenbock, wobei der Rollenbock und die Flachschiene relativ zueinander in Laufrichtung verschiebbar sind. Die Erfindung betrifft weiter einen Rollenbock für eine derartige Linearführung.

### Stand der Technik

Linearführungen der oben genannten Art sind bekannt. Die DE 31 32 869 A1 (K. Lahme) zeigt beispielsweise einen Werkzeugschlitten, der an seiner Unterseite je zwei Lagerböcke mit U-förmigem sowie zwei Lagerböcke mit L-förmigem Querschnitt aufweist, wobei die U-förmigen Lagerböcke in einem Abstand über einer ersten Führungsschiene und die L-förmigen Lagerböcke in demselben Abstand über einer zweiten Führungsschiene angeordnet sind. Die Lagerböcke umfassen Paare von je einem festen und einem verstellbaren Wälzlager, wobei die festen Wälzlager oben und die einstellbaren Wälzlager unten an einem überhängenden Teil der Führungsschienen anliegen. Die Lagerböcke von U-förmigem Querschnitt umfassen zusätzlich ein festes Wälzlager, welches an der Innenseite der Führungsschiene anliegt und ein verstellbares Wälzlager, das an der Aussenseite der Führungsschiene anliegt. Die Verstellbarkeit der Wälzlager wird durch Einsatz eines drehbaren Lagerbolzens mit exzentrischer Lagerstelle erreicht. Die Exzentrizität wird mit Hilfe einer Arretierschraube fixiert. Die äussere Laufbahn der Wälzlager ist ballig, dadurch wird die Führung in Querrichtung unempfindlich gegen Einbaufehler. Die Wälzlager sind so angeordnet, dass sie zur Neueinstellung des Spiels von aussen erreichbar sind. Die Bolzen der Wälzlager sind sowohl vor als auch hinter der Rolle abgestützt.

Die WO 2007/01221 A1 (Güdel AG) betrifft eine Linearführung mit einer Rolleneinheit und mit einer Schiene, die auf zwei gegenüberliegenden Seiten profiliert ist, so, dass die Rollen der Rolleneinheit in diesen Profilierungen laufen können. Die Rollen sind mittels vorgespannter Schrägkugellager an der Rolleneinheit gelagert, und die Rollen sind mit einer vorgegebenen Kraft gegenüber der Schiene vorspannbar. Dazu ist, bei paarweise gegenüberliegenden Rollen jeweils mindestens eine Rolle auf einstellbaren Exzentern gelagert, die restlichen sind auf festen Achsen gelagert. Der Exzenter umfasst einen Exzenterbolzen, welcher an einem Ende einen flanschartigen Abschnitt vorweist, eine Rolle, die über ein Schrägkugellager gelagert ist, welches auf den Exzenterbolzen aufgeschoben ist, und eine Lagerscheibe, welche auf den Exzenterbolzen aufgeschoben ist. Die Rolle und die Lagerscheibe sind über eine Spannmutter mit Innengewinde auf einem entsprechenden Aussengewinde des Exzenterbolzens festgeklemmt. Des Weiteren umfasst der Exzenter noch eine Klemmplatte, welche in axialer Richtung mit der Lagerscheibe zusammenwirkt und damit den Exzenterbolzen fixiert. Die Vorspannung wird durch Drehen des Exzenters und anschliessendem Verdrehsichern des Exzenters mit der Klemmplatte erreicht.

Es ist bekannt, dass über längere Distanzen frei hängende Schienen zum Durchhängen tendieren, woraus sich eine Wellenform der Schiene ergibt, welche unter Umständen eine genaue Positionierung einer an dem Rollenbock befestigten Last nicht mehr erlaubt. Zusätzlich kann die Kräfteverteilung auf die Rollen bei eingestellter Vorspannung durch die starre Ausführung des Werkzeugschlittens schon bei geringen Unebenheiten der Führungsschiene gestört werden. Somit besteht die Gefahr, dass sich bei einem Transport einer Last ein Rollenbock durch die Schienenunebenheiten verkantet und damit einzelne Rollen den Kontakt zur Schiene verlieren, was zu einer Beschädigung der Rollen führen kann.

### Darstellung der Erfindung

Aufgabe der Erfindung ist es, ei ne dem eingangs genannten technischen Gebiet zugehörende Linearführung zu schaffen, welche Unebenheiten der Schiene in Schienenlängsrichtung, ohne die Laufeigenschaften oder die Positionierungsgenauigkeit der Führung negativ zu beeinflussen, aufnehmen kann.

Die Lösung der Aufgabe ist durch die Merkmale des Anspruchs 1 definiert. Gemäss der Erfindung umfasst der Rollenbock eine Trageinrichtung für eine Hauptlast, welche über eine rechtwinklig zur Laufrichtung und parallel zur Lauffläche liegende Drehachse beweglich am Rollenbock gelagert ist.

Die Drehachse gewährleistet eine gleichmässige Verteilung der Last auf die tragenden Rollen und ermöglicht dadurch eine spielfreie Lagerung des Rollenbockes an der Flachschiene. Damit können die Laufeigenschaften und die Positionierungsgenauigkeit der Führung verbessert werden. Diese Vorrichtung gewährleistet auch dann eine spielfreie und präzise Bewegung, wenn die Schienen, zum Beispiel durch grosse Spannweiten, wellenförmig verformt sind. Damit können diese typischen Verformungen einer über längere Distanz frei hängenden Flachschiene aufgenommen und bezüglich der Schienenlängsrichtung ausgeglichen werden. Die Linearführung eignet sich somit besonders zum spielfreien und präzisen Bewegen von Lasten an Schienen mit grossen Spannweiten.

Bei der erfindungsgemässen Linearführung ist bevorzugt der Rollenbock als Laufwagen ausgebildet, welcher gegenüber der ortsfest angeordneten Schiene bewegbar ist. Es ist aber auch eine Verwendung möglich, bei welcher die Schiene mitsamt daran angeordneten Elementen bezüglich einer fest angeordneten Rolleneinheit verschoben wird.

Bevorzugt umfasst der Rollenbock mindestens vier Rollen, deren Drehachsen rechtwinklig zur Schienenlängsrichtung orientiert sind. Jeweils mindestens zwei der Rollen sind auf einer ersten Hauptfläche der Flachschiene, mindestens zwei weitere Rollen auf einer zweiten, der ersten Hauptfläche gegenüberliegenden Hauptfläche der Flachschiene, jeweils paarweise gegenüberliegend angeordnet. So wird die Schiene bei einer Vorspannung der Rollen gegen die Schiene gleichsam zwischen den Rollen eingeklemmt. Aufgrund dieser Anordnung der Rollen können Biegekräfte auf die Schiene bzw. auf den Rollenbock, wie sie bei nicht gegenüberliegenden Rollen auftreten, weitgehend vermieden werden. Zudem werden eine höhere Belastbarkeit und auch eine bessere Laufeigenschaft gegenüber einer Ausführung mit einer geringeren Anzahl tragenden Rollen erreicht. Die Rollen sind zum Erreichen besserer Laufeigenschaften vorzugsweise ballig ausgebildet.

Alternativ könnten die Rollen auch versetzt angeordnet werden, insbesondere wenn zum Beispiel nur drei auf die Schienenhauptflächen wirkende Rollen verwendet werden. Als eine weitere Möglichkeit können auch nur zwei auf die Schienenhauptflächen wirkende Rollen, zum Beispiel gegenüberliegend oder versetzt, angeordnet werden.

Vorzugsweise umfasst der Rollenbock mindestens eine weitere Rolle, die auf eine Seitenfläche der Flachschiene wirkt. Damit wird ein Verkanten des Rollenbockes verhindert. Insbesondere kann damit ein Verkanten des Rollenbocks in Richtung parallel zur Lauffläche und rechtwinklig zur Laufrichtung vermieden werden. Der Rollenbock kann damit auch rechtwinklig zur Laufrichtung und parallel zur Lauffläche gegenüber der Flachschiene vorgespannt werden, woraus störungsfreiere Laufeigenschaften resultieren. Der Rollenbock kann in dieser Ausführung seitliche Kräfte aufnehmen, was insbesondere bei der Führung von Werkzeugen oder Robotern von Vorteil ist. Es ist auch denkbar, auf beiden Seitenflächen der Flachschiene zusätzlich Rollen anzubringen. Dies hätte aber zur Folge, dass die Rollenböcke umständlicher montiert und demontiert werden müssten. Es kann auch gänzlich auf die auf eine Seitenfläche der Flachschiene wirkenden Rollen verzichtet werden. Die seitliche Führung des Rollenbocks kann in diesem Fall auch zum Beispiel durch ein Gleitlager bewerkstelligt werden.

Bevorzugt ist die Rotationsachse der einzelnen, auf eine Seitenfläche der Flachschiene wirkenden Rolle mit der Drehachse in einer Ebene, wobei die Ebene senkrecht zur Laufrichtung steht. Damit können die durch die Hauptlast erzeugten Kräfte in einer Ebene aufgenommen werden.

Durch eine bezüglich einer Längsrichtung zentrische Anordnung der zusätzlichen, auf eine Seitenfläche der Flachschiene wirkenden Rolle wird eine Bauweise mit erhöhtem Radstand bezüglich eines Rollenbockes ohne eine auf eine Seitenfläche der Flachschiene wirkende Rolle erreicht. Die Flachschiene kann nun, entsprechend dem erhöhten Radstand des Rollenbockes, so in Abständen bezüglich der Längsrichtung verschraubt werden, dass eine, durch eine auf die Hauptfläche der Flachschiene wirkende Rolle hervorgerufene Kraft jeweils durch mindestens eine Halteschraube der Flachschiene aufgenommen wird. Damit wird eine optimierte Verteilung der Kräfte auf die Halteschrauben der Flachschiene erreicht. Zum Beispiel können bei einem Radstand des Rollenbockes von 200mm die Halteschrauben der Flachschiene zur optimierten Kraftaufnahme in einem Abstand von ungefähr 50 mm bezüglich der Längsrichtung der Flachschiene vorgesehen sein. Allgemein betragen die Verschraubungsabstände bevorzugt weniger als ein Drittel des Abstandes zweier benachbarter eine Hauptlast aufnehmender Rollen.

Auch bei einer Anordnung einer beliebigen ungeraden Anzahl auf eine Seitenfläche der Flachschiene wirkenden Rollen kann die Rotationsachse der bezüglich Schienenlängsrichtung mittleren Rolle in der beschriebenen Ebene liegen. Alternativ kann die Rotationsachse auch ausserhalb der vorstehend beschriebenen Ebene zu liegen kommen. Beispielsweise können bei einer Anordnung einer geraden Anzahl auf eine Seitenfläche der Flachschiene wirkenden Rollen deren Rotationsachsen paarweise der beschriebenen Ebene gegenüberliegend im selben Abstand zur Ebene angeordnet sein.

Bevorzugt ist der Bereich des Winkels, den die Hauptlast bezüglich der Normalen zur Laufebene einnehmen kann, so zu wählen, dass die durch die Wellenform der Flachschiene in Schienenlängsrichtung hervorgerufenen Pendelbewegungen der Hauptlast gegenüber dem Rollenbock weitgehend aufgenommen werden können. Das Ausmass dieser Pendelbewegungen hängt einerseits von der Grösse der Last ab, eine genügend grosse Last kann selbst verantwortlich für das Durchbiegen der Schiene und damit für das Pendeln der Last sein. Anderseits sind die Wahl der Schiene und deren Spannweite als weitere gewichtige Einflüsse zu nennen. Es hat sich gezeigt, dass diese Einflüsse ausreichend berücksichtigt werden, wenn ein Drehwinkel (rechtwinklig zur Laufrichtung gemessen) im Intervall [-1°; 1°] ermöglicht wird.

Auch ein Drehwinkel in einem grösseren oder in einem kleineren Bereich sowie in einem asymmetrischen Intervall ist im Sinne der Erfindung. Diese Werte sind jeweils der maximalen Länge der frei hängenden Schienenabschnitte sowie der maximalen Hauptlast anzupassen.

Die Realisierung der Drehachse erfolgt bevorzugt durch ein bolzenartiges Element. Durch den runden Querschnitt ist einerseits die Rotation gewährleistet und anderseits die notwendige Steifigkeit gegeben.

Um gegebenenfalls das Gewicht minimal zu halten, könnte alternativ, bei einer Anwendung auf kleinen Lasten, die Drehachse auch durch ein rohrartiges Element realisiert werden. Gegenüber dem bolzenartigen Element könnte damit unter mässigem Stabilitätsverlust Gewicht eingespart werden. Auch im Sinne der Erfindung ist eine Ausführung mit einer als Kugelgelenk realisierten Rotationsachse. Damit können zusätzlich rechtwinklig zur Laufrichtung gerichtete Schwankungen der Schiene aufgenommen werden. Bei einer solchen Trageinrichtung würde allerdings die Hauptlast vom Kugelgelenklager nicht in Kraftwirkungsrichtung, sondern je nach Kugeldurchmesser in einem mehr oder weniger grossen Winkel zur Kraftwirkungsrichtung aufgenommen werden. Zudem ist eine solche Vorrichtung bezüglich Schwingverhalten der Last schlechter dämpfbar und die Lagerung müsste sich zwangläufig unterhalb der Schiene im Rollenbock befinden.

Es ist vorzugsweise vorgesehen, einen mittleren Abschnitt des bolzenartigen Elements in einer Aufnahme des Rollenbockgehäuses zu lagern und an den gegenüberliegenden Enden Montageplatten der Trageinrichtung an dem bolzenartigen Element zu befestigen, zum Beispiel anzuschrauben oder anzukleben. Mit Vorteil wird der Reibungswiderstand zwischen dem bolzenartigen Element und der Aufnahme in einem der Anwendung angepassten Bereich gehalten. Unter bestimmten Belastungen und Beschleunigungen des Rollenbocks kann die Last in Schwingung geraten, im schlimmsten Fall wird die Linearführung damit in Eigenschwingung versetzt. Damit könnten die Linearführung sowie der Antrieb derselben Schaden nehmen. Ausserdem wäre damit eine präzise Positionierung nicht mehr gewährleistet, was zum Beispiel bei einer Führung von Werkzeugen unerwünscht ist. Diese Effekte können zum Beispiel über den Reibungswiderstand des bolzenartigen Elements beeinflusst werden. Einerseits soll die Reibung klein genug sein, so dass die Bewegung des bolzenartigen Elements gewährleistet bleibt, aber anderseits gross genug, dass die Hauptlast nicht zu Schwingen beginnt. Dazu wird als eine bevorzugte Ausführung das bolzenartige Element beschichtet und in einer Hülse gelagert, die an der Hülseninnenseite zum Beispiel anodisiertes Aluminium aufweist. Der Bolzen kann zudem gegenüber der Hülse eine gewisse Presspassung aufweisen um ein Schwingen der Last weiter zu unterdrücken.

Die Montageplatten können auch mittels Spannmuttern oder Schrauben an dem bolzenartigen Element befestigt sein. Das bolzenartige Element kann alternativ an den gegenüberliegenden Enden im Rollenbockgehäuse in vorstehend beschriebenen Sinn gelagert sein, womit dann eine Montageplatte an dem mittleren Abschnitt des bolzenartigen Elements der Trageinrichtung angebracht ist. Zudem sind auch die Verwendungen von Rollenlagern oder Kugellagern statt des beschichteten Bolzens und der anodisiertes Aluminium enthaltenden Hülse eine mögliche Realisierung der Lagerung des bolzenartigen Elements. Es ist aber auch bei diesen Ausführungsformen darauf zu achten, dass die Dämpfung gewährleistet ist, damit das System im Betrieb nicht in Schwingung geraten kann. Als weitere Ausführungsmöglichkeit können mit dem Rollenbockgehäuse verbundene bolzenförmige Vorsprünge zur Lagerung der Halteplatten vorgesehen sein.

Die Befestigung der Hauptlast erfolgt vorzugsweise rechtwinklig zur Drehachse und der Laufrichtung an den Montageplatten der Trageinrichtung mittels Schrauben. Damit werden die Halterungsschrauben durch die Gewichtskraft der Hauptlast bei nicht beschleunigtem Rollenbock am wenigsten belastet. Die Halteplatten können zusätzlich Bohrungen parallel zu den Schrauben aufweisen, so dass Stifte einer Hauptlast formschlüssig in den entsprechenden Bohru ngen der Montageplatten aufgenommen werden können, womit, insbesondere vor dem Verschrauben der Hauptlast mit den Montageplatten eine vorgängige Positionierung ermöglicht wird, so dass die Schrauben mühelos eingeschraubt werden können. Vorzugsweise weist zumindest eine der beiden Montageplatten eines Rollenbockes mindestens zwei Bohrungen auf, so dass mittels zweier Stifte der Hauptlast eine exakte Vorpositionierung möglich ist.

Falls die Rollenböcke starken Beschleunigungen ausgesetzt sind, ist es auch denkbar, die Schrauben in anderen Winkeln anzuordnen, um den bei den erwarteten Beschleunigungen auftretenden Kräften besser entgegenzuwirken. Auch können statt Schrauben andere Befestigungsmittel in Betracht gezogen werden. Insbesondere bei einer Verwendung der Linearführung zur Bewegung von Werkzeugen, die regelmässig ausgewechselt werden müssen, kann es von Vorteil sein, Schnappverschlüsse, Bolzen oder dergleichen zu verwenden.

Um die Rotationsbewegung der Trageinrichtung gegenüber dem Rollenbockgehäuse zu gewährleisten, ist, neben der vorstehend beschriebenen Lagerung des bolzenartigen Elements, auch vorzugsweise ein Gleitlager zwischen dem Rollenbockgehäuse und den Montageplatten der Trageinrichtung vorgesehen. Auch damit kann durch eine dämpfende Lagerung das Schwingverhalten der Last gegenüber dem Rollenbock gesteuert werden. Dies kann mittels variabler Vorspannung der Halteplatten gegenüber dem Rollenbockgehäuse erreicht werden. Zum Beispiel können die Halteplatten zwischen arretierbaren Spannmuttern und dem Rollenbockgehäuse eingeklemmt werden.

Eine andere Lagerung, zum Beispiel eine Kugellagerung könnte alternativ denselben Zweck erfüllen, wäre aber aufwendiger in der Realisierung und in der Wartung.

Mit Vorteil sind die Rolleneinheiten so aufgebaut, dass sie passförmig in das Rollenbockgehäuse eingeführt und ausgewechselt werden können. So beschaffene Rollenböcke erleichtern die Wartung und Reparatur derselben wesentlich.

Die Rolleneinheiten können alternativ auch fix im Rollenbock eingebaut sein, was, unter Betrachtung der Herstellung der Rollenböcke vorteilhaft ist. Damit müsste aber zum Beispiel bei einem Schadensfall an einer Rolle der gesamte Rollenbock ausgewechselt werden, was zu Produktionsausfall und höheren Kosten führen kann.

Mit Vorteil umfasst eine Rolleneinheit einen zylindrischen Lagerbolzen, der zentrisch oder exzentrisch mit der geschlossenen Seite eines einseitig geschlossenen zylindrischen Lagerkörpers verbunden ist und einer Rolle, welche über ein Schrägkugellager auf dem Lagerbolzen gelagert ist. Bei der Ausführung mit dem exzentrisch verbundenen Lagerbolzen kann eine Vorspannung eingestellt werden. Die Einstellung der Vorspannung erfolgt durch Verdrehen der Rolleneinheit in der Aufnahme des Rollenbockgehäuses, so dass der Abstand der Lagerachse von der Kontaktfläche der Rolle mit der Schiene verändert wird.

Bevorzugt weist das Rollenbockgehäuse im Randbereich der Aufnahmen der Rolleneinheiten eine oder mehrere in axialer Richtung verlaufende Bohrungen auf, welche zur Aufnahme von Schrauben vorgesehen sind. Die Bohrungen und die Schraubenköpfe sind so ausgebildet und angeordnet, dass die Schraubenköpfe im festgeschraubten Zustand teilweise in den Innenraum der Aufnahmen und teilweise in eine entsprechende Ausnehmung des Rollenbockgehäuses ragen, im Gegensatz zum Bereich des Gewindes der Schraube, welcher nicht in den Innenraum der Aufnahmen, sondern ausschliesslich im Rollenbockgehäuse eingelassen ist. Die Rolleneinheiten weisen mindestens eine, aber vorzugsweise mehrere entsprechende Kerben auf, so dass die Rolleneinheiten in montiertem Zustand durch die teilweise in die Ausnehmungen des Rollenbockgehäuses und teilweise in eine Kerbe der Rolleneinheit ragenden Schraubenköpfe gegen Verdrehung gesichert sind. Vorzugsweise handelt es sich bei den Schrauben um handelsübliche Inbusschrauben, wobei aber auch andere Schraubentypen, wie zum Beispiel Torx oder ähnliche, verwendet werden können. Die Bohrungen im Randbereich einer Rolleneinheit und die Kerben der Rolleneinheit sind dabei so angeordnet, dass eine ausreichende Zahl verschiedener Verdrehpositionen erreicht werden können. Dazu können zum Beispiel bei drei Bohrungen im Rollenbockgehäuse die Abstände der Bohrungen vier mal kleiner sein als diejenige zwischen den Kerben, so dass durch die Wahl einer Bohrung eine Feinabstimmung bezüglich zweier benachbarter Kerben erreicht werden kann.

Durch die diskrete Verdrehsicherung wird erreicht, dass in einfacher Weise ein oder mehrere Rollenböcke exakt in einer horizontalen Ebene ausgerichtet werden können, indem alle eine Hauptlast aufnehmenden Rolleneinheiten mittels derselben Kerbe mit einer Schraube verdrehsichert werden. Dies ist insbesondere dann von Vorteil, wenn der Rollenbock zum Beispiel über eine Zahnstangenanordnung angetrieben wird, oder wenn nach einer Fehlfunktion der Linearführung, insbesondere nach dem Auswechseln einer Rolleneinheit, die Rollenböcke wieder ausgerichtet werden müssen. Die Einstellung ist dadurch auch einfach kontrollierbar, da nur die Ausnehmungen in der Rolleneinheit gezählt werden müssen. Des Weiteren können sämtliche Rolleneinheiten identisch ausgebildet sein, da bei fehlender Feststellschraube ein stufenloses Verdrehen der Rolleneinheit zur Einstellung einer Vorspannung möglich bleibt.

Eine Verdrehsicherung könnte alternativ auch durch im Rollenbockgehäuse radial zu den Rolleneinheiten angeordnete Schrauben erreicht werden, wobei entsprechende Ausnehmungen an der Aussenseite der Rolleneinheiten und zudem eine Skalierung auf dem Lagerkörper der Rolleneinheit sowie auf dem Rollenbockgehäuse zur Kontrolle der Verdrehung vorzusehen wären.

Alternativ können anstelle der Schrägkugellager auch andere handelsübliche Lager wie zum Beispiel Nadellager oder ähnliches verwendet werden. Die Lagerkörper und Lagerbolzen können wahlweise massiv oder als Hohlzylinder sowie als ein- oder beidseitig geschlossene Hohlzylinder vorliegen, wobei mindestens der Lagerkörper massiv oder einseitig geschlossen sein muss. Das Verdrehen der Rolleneinheit in der Aufnahme des Rollenbockgehäuses kann beispielsweise durch eine sechskantige Innenform des Lagerkörpers und einem entsprechenden Innensechskant-Schlüssel erreicht werden. Es ist auch denkbar, einen Drehmomentschlüssel oder eine ähnliche Vorrichtung zur kraftmessenden Einstellung der Vorspannung vorzusehen.

Vorzugsweise sind die Rollen auf beidseitig abgestützten Bolzen gelagert. Durch die beidseitige Lagerung des Bolzens ist die Steifigkeit der Anordnung massgeblich erhöht, so dass auch grössere Vorspannungen zwischen den Rollen und der Schiene definiert angelegt werden können. Die Linearführung kann somit grössere Maximalkräfte aufnehmen. Gleichzeitig kann der Bolzen mit einem verhältnismässig kleinen Querschnitt ausgeführt werden, so dass die Rollenlagerung kompakter gefertigt werden kann. Bevorzugt erfolgt die stirnseitige Lagerung des Bolzens zwischen einer exzentrisch und vorne am Lagerbolzen befestigten Lagerscheibe und einer entsprechenden Aufnahme am Rollenbockgehäuse, wobei die Aufnahme am Rollenbockgehäuse mit der Lagerscheibe zumindest teilweise im Bereich der Flachschiene gegenüberliegenden Seite der Lagerscheibe in Kontakt steht. Damit kann der durch die Hauptlast entstehende Druck durch die Aufnahmen aufgefangen werden und zudem kann damit ein einfaches Einstellen des exzentrisch gelagerten Bolzen erreicht werden, nämlich dadurch, dass die Lagerscheibe dem exzentrisch gelagerten Bolzens entsprechend ebenfalls exzentrisch ausgebildet ist, womit, unabhängig zum Grad der Verdrehung der Rolleneinheit, die Lagerscheibe in stetem Kontakt mit der Aufnahme bleibt und damit eine Lagerung der Rolleneinheit, respektive eine Aufnahme der Kräfte gewährleistet bleibt.

Falls die aufzunehmenden Maximalkräfte beschränkt sind oder nur in bestimmten Richtungen auftreten, kann auf die beidseitige Abstützung verzichtet werden. In diesem Fall wird der Bolzen mit Vorteil etwas stärker ausgeführt.

Durch die definierte Vorspannung der Rollen gegenüber der Schiene ist die Lagerung auch bei erhöhter Belastung spielfrei, so dass ein reibungsloser Betrieb und eine präzise Positionierung gewährleistet sind. Die Vorspannungen bewirken zudem, dass in der Lagerung der Rolleneinheit bezüglich der Schiene eine hohe Steifigkeit erreicht wird, so dass auch grössere Kräfte aufgenommen werden können. Die Linearführung eignet sich somit auch zum Bewegen von Werkzeugen für mittelschwere bis schwere Bearbeitungsvorgänge.

Mit Vorteil ist mindestens eine der zwei sich gegenüberliegenden Rollen einstellbar exzentrisch gelagert. Dies erlaubt eine präzise Einstellung der vorgegebenen Vorspannung der Rolle gegenüber der Schiene, wozu gleichzeitig auch nur verhältnismässig geringe Kräfte aufgewendet werden müssen. In der Regel genügt es für eine zuverlässige Einstellung der Vorspannung, wenn sämtliche Rollen auf einer der gegenüberliegenden Seiten der Schiene einstellbar exzentrisch gelagert sind, während sämtliche Rollen auf der anderen Schienenseite auf einer festen Achse gelagert werden. Die durch die Einstellung der Exzentrizität der exzentrisch gelagerten Rollen eingebrachte Vorspannung verteilt sich ohnehin auf die Rollen auf beiden Seiten der Schiene, wobei die quantitative Verteilung von der Anordnung der Rollen bezüglich der Schiene und von der Art der zu bewegenden Last abhängig ist.

Alternativ sind andere Mittel zum Einstellen der Vorspannung der Rollen gegenüber der Schiene vorgesehen. Der Lagerbolzen des Schrägkugellagers kann beispielsweise entlang einer linearen Führung auf die Schiene zu und von dieser weg bewegt werden.

Nachdem die Rolleneinheit auf die Schiene aufgesetzt worden ist, kann die Rolleneinheit in eine Drehposition gebracht werden, in welcher die gewünschte Vorspannung zwischen der Rolle und der Schiene erreicht wird. Anschliessend wird bevorzugt eine Klemmplatte in axialer Richtung festgezogen, bis sie reibschlüssig mit dem Lagerkörper zusammenwirkt und somit die Rolleneinheit gegen Verdrehen fixiert. Die eingestellte Vorspannung wird also beibehalten. Weil die Klemmplatte axial auf die Rolle zu bewegt wird und beim Festziehen keine Drehung ausführt, werden - im Gegensatz zu bekannten Doppelmutter-Anordnungen - durch das Festziehen die eingestellte Exzentrizität und damit die Vorspannung nicht beeinflusst. Damit die Klemmplatte axial festgezogen werden kann, können beispielsweise mehrere Schrauben vorgesehen sein, deren Schäfte durch Löcher in einem Randbereich der Klemmplatte geführt sind und mit jeweils einem Gewinde im Rollengehäuse zusammenwirken.

Eine andere Möglichkeit wäre eine an sich bekannte radiale Sicherungsschraube für den Lagerkörper vorzusehen, um ein Verdrehen desselben bezüglich des exzentrisch verbundenen Lagerbolzens zu verhindern (siehe oben).

Vorzugsweise ist das Rollenbockgehäuse so beschaffen, dass die Rolleneinheit durch Entfernen der Klemmplatte von aussen zugänglich demontiert und ersetzt werden kann. Dies erleichtert im Betrieb die Wartung und die Reparatur des Rollenbocks.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1A: Eine Schrägansicht einer erfindungsgemässen Linearführung;
- Fig. 1B: eine schematische Darstellung einer Seitenansicht der Linearführung;
- Fig. 1C: eine schematische Darstellung einer Querschnittsebene der Linearführung, welche rechtwinklig zur Schienenlängsrichtung orientiert ist und die Rotationsachse einer auf eine Seitenfläche der Flachschiene wirkenden Rolle enthält;
- Fig. 2: eine Seitenansicht eines erfindungsgemässen Rollenbockes;
- Fig. 3: eine Ansicht des Rollenbockes von oben, senkrecht zur Lauffläche;
- Fig. 4: eine Ansicht des Rollenbockes in Schienenlaufrichtung;
- Fig. 5: ein Querschnitt quer zur Schienenlaufrichtung der Linearführung durch zwei sich gegenüberliegende Rollen;
- Fig. 6: ein weiterer Querschnitt quer zur Schienenlaufrichtung der Linearführung durch die auf eine Seitenfläche der Flachschiene wirkende Rolle;
- Fig. 7: eine schematische Darstellung des Rollenbockes in Richtung der Drehachse der auf eine Seitenfläche der Flachschiene wirkenden Rolle mit einem vergrösserten Ausschnitt A der Rolleneinheit; und
- Fig. 8: eine weitere Seitenansicht des Rollenbockes mit vergrösserten Ausschnitten B und C zweier Rolleneinheiten.

Grundsätzlich sind in den Figuren gleiche Teile mit gleichen Bezugszeichen versehen.

### Wege zur Ausführung der Erfindung

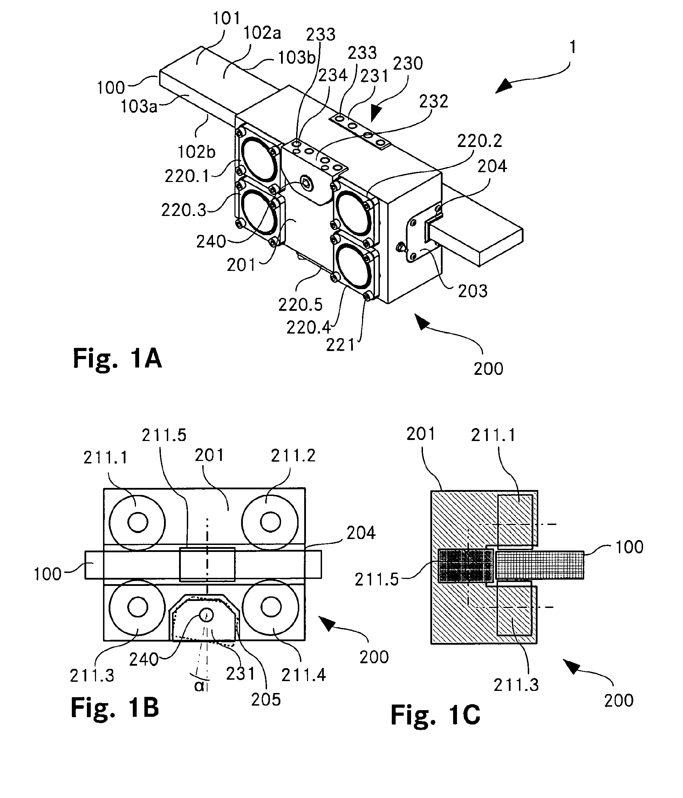

Die Figur 1A zeigt eine Schrägansicht einer erfindungsgemässen Linearführung 1, in der Figur 1B ist eine schematische Darstellung eines Querschnitts durch die Linearführung 1 parallel zur Schienenlängsrichtung und der Normalen zur Lauffläche 101 und in der Figur 1C ist eine schematische Darstellung eines Querschnitts durch die Linearführung 1 parallel zur Normalen zur Lauffläche 101 und rechtwinklig zur Schienenlängsrichtung dargestellt.

Die Linearführung 1 umfasst eine gerade Flachschiene 100 und einen Rollenbock 200, welcher entlang der Flachschiene 100 verschiebbar ist. Der Rollenbock 200 weist einen Kanal 204 zur Aufnahme eines Teilstücks der Flachschiene 100 auf und wirkt mit einer Seitenfläche 103a und Hauptflächen 102a, 102b der Flachschiene 100 zusammen.

Angrenzend an den Kanal 204 und teilweise in diesen hineinragend sind in der vorliegenden Ausführung gesamthaft fünf Rollen 211.1...211.5 angeordnet. Beidseitig der Hauptflächen 102a, 102b der Flachschiene 100 sind jeweils zwei Rollen 211.1, 211.2; 211.3, 211.4 angeordnet (siehe Figur 1B), deren Drehachsen senkrecht zur Längsrichtung der Flachschiene 100 und parallel zur Lauffläche 101 derselben ausgerichtet sind. Die fünfte Rolle 211.5, deren Drehachse senkrecht zur Lauffläche 101 gerichtet ist, wirkt auf die dem Rollenbock 200 zugewandte Seitenfläche 103a der Flachschiene 100 gemäss der Figur 1B oder 1C. Wie in der Figur 1B ersichtlich, stehen sich jeweils zwei Rollen 211.1, 211.3; 211.2, 211.4 bezüglich der Schiene 100 direkt gegenüber, so dass die Flachschiene 100 zwischen den jeweiligen Rollen 211.1, 211.3 beziehungsweise 211.2, 211.4 eingeklemmt ist. Die Rolle 211.5 ist so angeordnet, dass diese zu den vier Rollen 211.1, 211.2; 211.3, 211.4 jeweils denselben Abstand hat.

Der Rollenbock 200 weist in der hier dargelegten Ausführungsform im Wesentlichen eine rechtwinklig zur Schienenlängsrichtung liegende Symmetrieebene auf, insbesondere bezüglich der Rollenanordnungen der Rollen 211.1...211.5. Zwei der Rollen 211.3, 211.4, welche auf derselben Hauptfläche 102b der Flachschiene 100 angeordnet sind, sind exzentrisch gelagert (dies wird nachfolgend näher beschrieben), so dass sich paarweise eine Vorspannung zwischen den jeweiligen Rollen 211.1, 211.2; 211.3, 211.4 und der Flachschiene 100 mit vorgegebener Kraft einstellen lässt, wobei durch die paarweise gegenüberliegende Anordnung der auf eine Hauptfläche 102a, 102b wirkenden Rollen 211.1, 211.2; 211.3, 211.4 keine Biegkraft auf die Flachschiene 100 wirkt und somit diese auch bei einer grossen Vorspannung nicht verformen kann. Die Figur 1A zeigt zusätzlich fünf Klemmplatten 220.1...220.5 zur Fixierung der Rolleneinheiten 210.1...210.5 (nicht sichtbar), welche später beschrieben sind.

Figur 1A zeigt zudem eine Trageinrichtung 230 des Rollenbocks 200, welche zwei Montageplatten 231, 232 mit Gewindebohrungen 233 zur Befestigung einer Hauptlast mittels Schrauben und einen Bolzen 240 zur rotierbaren Lagerung der Trageinrichtung 230 und somit der Hauptlast umfasst. Die zwei Montageplatten 231, 232 sind über den Bolzen 240 in einem Rollenbockgehäuse 201 rotierbar gelagert. Die Bolzenlagerung der Halteplatten 231, 232 gewährleistet bei einem Transport einer Last unter der üblichen Verwendung von mehreren, distanziert angeordneten Rollenböcken 200 eine gleichmässige Verteilung der Last und ermöglicht dadurch eine spielfreie Lagerung der Rollenböcke 200 an einer oder mehreren Flachschienen 100. Die Trageinrichtung 230 hat bezüglich den zwei auf dieselbe Hauptfläche 102a oder 102b wirkenden Rollen 211 denselben Abstand. Der Rollenbock 200 behält diesbezüglich im Wesentlichen seine rechtwinklig zur Schienenlängsrichtung liegende Symmetrieebene bei. In Figur 1A ist die Anordnung des Rollenbocks 200 für eine aufliegende Hauptlast, in Figur 1B eine andere mögliche Anordnung für eine hängende Last dargestellt, wobei die beiden Anordnungen durch eine Drehung des Rollenbocks 200 um 180° bezüglich einer rechtwinklig zur Laufrichtung und parallel zur Lauffläche 101 liegenden Rotationsachse ineinander überführt werden können.

Die Flachschiene 100 ist aus gehärtetem Vollstahl gefertigt und weist einen rechteckigen Querschnitt auf. An der Seitenfläche 103a der Flachschiene 100 ist ein Massstab für ein entsprechendes Messsystem angeordnet (nicht dargestellt). Dieser weist in an sich bekannter Weise mehrere Markierungen auf, welche Absolutpositionen an der Flachschiene 100 kennzeichnen. Die Markierungen können unterschiedlich ausgebildet und beispielsweise optisch oder magnetoresistiv erfassbar sein. Für den Messprozess wird an dem Rollenbock 200 ein Messkopf fest angeordnet, der einen Sensor umfasst, mittels welchem die Positionsinformationen des Massstabs erfasst werden können (nicht dargestellt). Die erfassten Informationen werden elektronisch zu (absoluten) Positionsangaben verarbeitet und beispielsweise an eine Maschinensteuerung übermittelt. Der Rollenbock 200 lässt sich, wie in der Figur 1A dargestellt, seitlich an der Flachschiene 100 anbringen, d.h. die Rollenachsen der auf eine Hauptfläche 102a oder 102b wirkenden Rollen 211.1, 211.2; 211.3, 211.4 sind im Betrieb horizontal. Je nach Einsatzzweck kann die Linearführung 1 zum Beispiel um 180° um die Schienenlängsachse gedreht werden. Die Trageinrichtung 230 kann somit sowohl unterhalb als auch oberhalb der Flachschiene 100 zu liegen kommen und damit kann die Hauptlast entweder oberhalb oder unterhalb der Flachschiene 100 an dem Rollenbock 200 montiert werden.

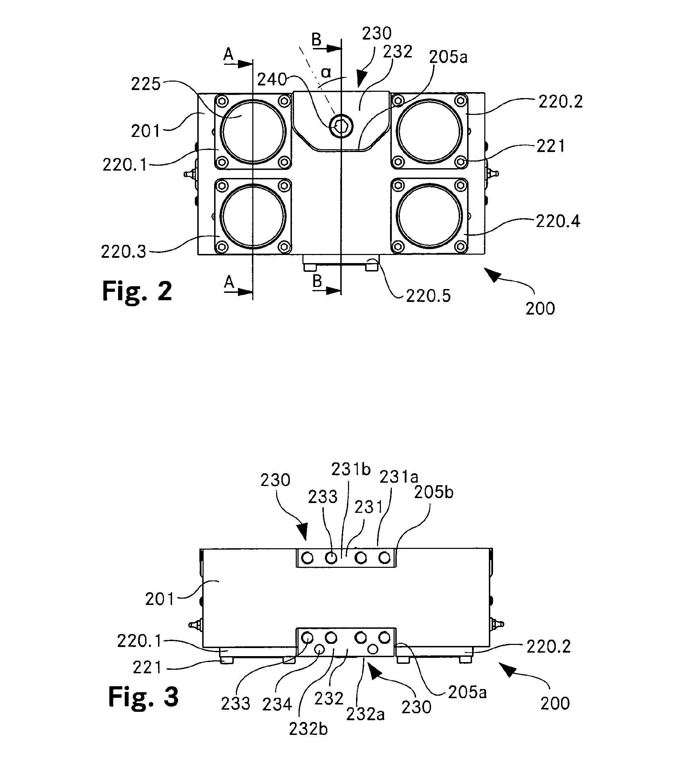

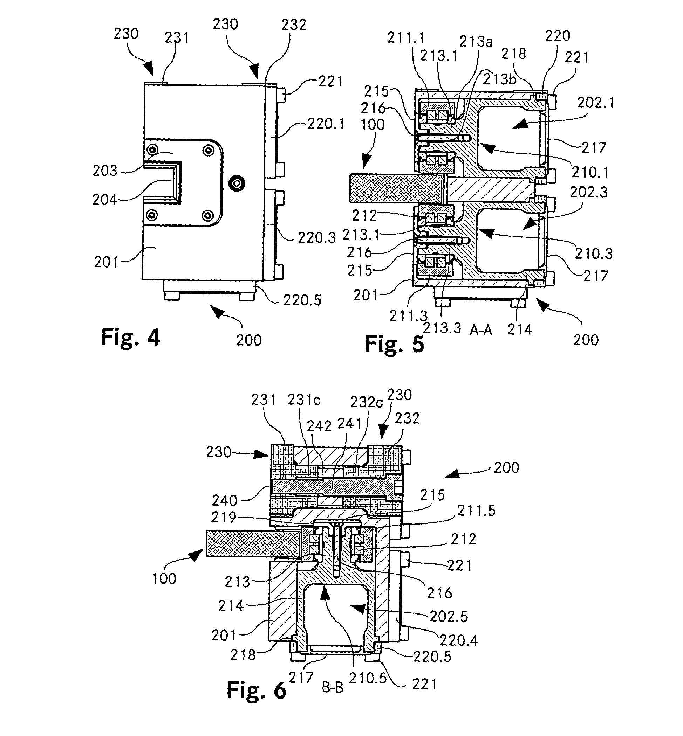

Die Figur 2 zeigt eine Seitenansicht von aussen auf den Rollenbock 200, wobei fünf Klemmplatten 220.1...220.5, die Montageplatte 232 und der Bolzen 240 sichtbar sind, der Kanal 204 jedoch auf der gegenüberliegenden, inneren Seite des Rollenbocks 200 liegt. Die in Figur 2 angedeuteten Schnitte bezüglich der Ebene A-A und der Ebene B-B sind in den Figuren 5 respektive Figur 6 dargestellt. Weiter ist in der Figur 2 die Montageplatte 232 als Bestandteil der Trageinrichtung 230, die über den Bolzen 240 am Rollenbockgehäuse 201 gelagert ist, dargestellt. Die Figur 3 zeigt eine Ansicht des Rollenbocks 200 von oben, senkrecht zur Lauffläche 101, wobei die beiden Montageplatten 231, 232 und zwei Klemmplatten 220.1, 220.2 sichtbar sind. Die Montageplatten 231, 232 weisen eine im Wesentlichen rechteckige Plattenform mit einer Fläche 231a, 232a auf, deren über eine der längeren Seiten benachbarte Eckabschnitte derart in einem Winkel von 45° abgeschnitten sind, dass die Länge der schräg verlaufenden Abschnitte der Länge des verbleibenden dazwischenliegenden Abschnitts entspricht. An der längsten Randfläche 231b, 232b und senkrecht zu derselben sind vier in einer Reihe und in etwa demselben Abstand zueinander liegende Gewindebohrungen 233 für die Aufnahme von Befestigungsschrauben für die Hauptlast vorhanden. Zusätzlich weist die Montageplatte 232 zwei Stiftbohrungen 234, welche zur Aufnahme von entsprechenden Stiften der Hauptlast vorgesehen sind, auf, um eine Vorpositionierung der Hauptlast auf den Montageplatten 231, 232 zu erreichen, womit beim anschliessenden Verschrauben der Hauptlast mit den Montageplatten 231, 232 die Schrauben nicht verkanten können. Die Bohrung für den Bolzen 240 liegt auf der Mittelsenkrechten der längsten Kante der Fläche 231a, 232a, etwas unterhalb der Plattenmitte, und mündet auf der Platteninnenseite in einen hohlzylinderförmigen Fortsatz 231 c, 232c, durch welchen die Lagerung in den entsprechenden Ausnahmen es Rollenbockgehäuses 201 stabilisiert wird (in der Figur 3 nicht sichtbar, siehe Figur 6). Der maximale Drehwinkel α, den die Montageplatten 231, 232 gegenüber dem Rollenbockgehäuse 201 einnehmen können, beträgt ± 1°. Eine solche Auslenkung der Montageplatte 231 ist (nicht massstabsgetreu) in der Figur 1B, für die Montageplatte 232 in Figur 2 ersichtlich. Die maximale positive wie auch negative Auslenkung der Halteplatten wird durch einen Anschlag am Rollenbockgehäuse 201 kontrolliert. In der vorliegenden Ausführung sind dazu Aussparungen 205a, 205b (in Figur 2 nicht sichtbar) des Rollenbockgehäuses 201 so dimensioniert, dass die dort montierte Montageplatte 232, 231 um die durch den Bolzen 240 realisierte Drehachse einen Winkel ausschliesslich im Intervall [-1°; 1°] einnehmen kann. Der Winkelbereich wird in der Praxis der konkreten Anwendung angepasst.

Die Figur 4 zeigt eine Ansicht des Rollenbockes 200 in Schienenlaufrichtung. Um einer Verschmutzung, respektive einer Beschädigung des Rollenbocks 200 vorzubeugen, sind stirnseitig, den Kanal 204 umschliessend, jeweils Stirnplatten 203 mit je vier Schrauben angebracht. Schmierplatten zum regelmässigen Schmieren des Rollenbocks 200 können auch in an sich bekannter Art und Weise jeweils stirnseitig angebracht werden, um die mittlere Lebensdauer und die Wartung der Linearführung 1 zu optimieren (in dieser Ausführung nicht realisiert).

Die Figur 5 zeigt einen Querschnitt entlang der in Figur 2 gezeichneten Ebene A-A, quer zur Schienenlaufrichtung der Flachschiene 100 der Linearführung 1 und durch die Ebene, welche die Drehachsen der Rollen 211.1, 211.3 enthält. Das Rollenbockgehäuse 201 weist gesamthaft fünf passförmige Aufnahmen 202.1 - 202.5 für die fünf Rolleneinheiten 210.1 - 210.5 auf, wobei aus der Figur 5 nur die Rolleneinheiten 210.1, 210.3 und die entsprechenden Aufnahmen 202.1, 202.3 detailliert ersichtlich sind.

Eine Rolleneinheit 210 umfasst folgendes:
a) einen zylindrischen Lagerbolzen 213 mit einem Innengewinde 213b parallel zur Längsrichtung und zentrisch zu dessen Querschnitt, auf welchem die Rolle 21 über ein Schrägkugellager 212 aufschiebbar ist;
b) eine Schraube 216 mit Aussengewinde und eine zentrische oder exzentrische Lagerscheibe 215, wobei die Lagerscheibe 215 auf die Schraube 216 aufschiebbar ist und das Gewinde der Schraube 216 dem Innengewinde 213b des zylindrischen Lagerbolzens 213 entspricht; sowie
c) einem einseitig geschlossenen zylindrischen Lagerkörper 214, wel cher über seine geschlossene Grundfläche mit dem Lagerbolzen 213 zentrisch oder exzentrisch verbunden ist und einen kreisförmigen Aussenring 218 aufweist. Der Radius des Lagerkörpers 214 ist grösser als derjenige der Rolle 211 und der maximal möglichen exzentrischen radialen Verschiebung des Lagerbolzens 213 gegenüber des Lagerkörpers 214 zusammen.

Die Rolleneinheiten 210.1 - 210.5 gliedern sich in zentrische Rolleneinheiten 210.1, 210.2 und exzentrische Rolleneinheiten 210.3...210.5. Die exzentrischen Rolleneinheiten 210.3, 210.4, 210.5 und die zentrischen Rolleneinheiten 210.1, 210.2 sind unter sich ähnlich aufgebaut. Nachfolgend sei der Aufbau einer exzentrischen Rolleneinheit 210.3...210.5 beschrieben, wobei im Anschluss auf die Unterschiede des Aufbaus der zentrischen Rolleneinheiten 210.1, 210.2 eingegangen wird. Der Lagerbolzen 213, auf dem die Rolle 21 über das Schrägkugellager 212 gelagert ist, ist exzentrisch mit dem Lagerkörper 214 verbunden. Mit der Schraube 216 ist die Lagerscheibe 215 ebenfalls und in demselben Masse exzentrisch mit dem Lagerbolzen 213, aber zentrisch bezüglich des Lagerkörpers 214 verschraubt. Die Lagerscheibe 215 und der Lagerkörper 214 liegen auf derselben Rotationsachse, wobei die Rotationsachse des Lagerbolzens 213 parallel und rechtwinklig zu der Rotationsachse des Lagerkörpers 214, respektive der Lagerscheibe 215 verschoben ist. Damit ist die Innenseite des Schrägkugellagers 212 zwischen der Lagerscheibe 215 und einem zwischen Lagerbolzen 213 und Lagerkörper 214 liegenden flanschartigen Abschnitt 213a exzentrisch gegenüber der Drehachse des Lagerkörpers 214 festgeklemmt und bildet als ganzes eine exzentrische Rolleneinheit 210.3...210.5.

Im Unterschied dazu liegen bei einer zentrischen Rolleneinheit 210.1, 210.2 die Rotationsachsen des Lagerbolzens 213 und des Lagerkörpers 214 auf derselben Gerade. Die passförmigen Aufnahmen 202.1...202.5 weisen untereinander identische Formen auf, da die Rolleneinheiten 210.1...210.5, unabhängig ob exzentrisch oder zentrisch ausgebildet, über den Lagerkörper 214 und die Lagerscheibe 215 mit derselben Rotationsachse im Rollenbockgehäuse 201 gelagert sind. Die Rollen 211 sind so dimensioniert, dass einerseits aufgrund ihres Durchmessers nur moderate Winkelbeschleunigungen auftreten, womit relativ hohe Geschwindigkeiten und entsprechende Beschleunigungen ohne Überbeanspruchung der Schrägkugellager 212 erreicht werden können, anderseits aber trotzdem eine kompakte Bauweise des Rollenbocks 200 möglich bleibt. Die Rollen 211 sind leicht konvex gewölbt (bombiert), so dass Schwankungen des Widerstandes durch Belastungsänderungen und Positionierungsfehler auf ein Minimum reduziert werden.

Die Flachschiene 100 ist zwischen den jeweils zwei sich gegenüberliegende Rollen 211.1, 211.3; 211.2, 211.4 der entsprechenden Rolleneinheiten 210.1, 210.3; 210.2, 210.4 eingeklemmt. Bei den Rolleneinheiten 210.1, 210.2 ist der Lagerbolzen 213 m it dem Lagerkörper 214 zentrisch, bei den restlichen Rolleneinheiten 210.3...210.5 exzentrisch verbunden. Über die exzentrischen Rolleneinheiten 210.3, 210.4 kann die Vorspannung gegenüber der Flachschiene 100 rechtwinklig zur Lauffläche 101, mit der Rolleneinheit 210.5 parallel zur Lauffläche 101 und rechtwinklig zur Schienenlängsrichtung eingestellt werden. Dazu werden die Rolleneinheiten 211 in die entsprechenden passförmigen Aufnahmen 202.1...202.5 eingeführt, wobei eine dem Aussenring 218 entsprechende Aussparung 205 am Rollenbockgehäuse 201 die Einführtiefe der Rolleneinheit 211 vorgibt. Der Aussenring 218 und die Aussparung 205 am Rollenbockgehäuse 201 wirken derart zusammen, dass die Lagerscheibe 215 passgenau in einer entsprechenden Lagerbuchse 219 im Rollenbockgehäuse 201 aufgenommen wird und dadurch die Rolleneinheit 210 stirnseitig abstützt. Durch Drehen der exzentrischen Rolleneinheit 210.3...210.5 in der entsprechenden passförmigen Aufnahme 202.3...202.5 entlang der Rotationsachse der entsprechenden Rolle 211.3, 211.4, 211.5 lässt sich eine Vorspannung zwischen den sich gegenüberliegenden Rollen 211.1, 211.3; 211.2, 211.4 respektive der Rolle 211.5 und der Flachschiene 100 einstellen. Dies wird durch eine sechskantige Innenform des Lagerkörpers 214 und einem entsprechenden Innensechskant-Schlüssel erreicht (nicht dargestellt).

Die Rolleneinheiten 210.1...210.5 werden mittels Klemmplatten 220.1...220.5 in den passförmigen Aufnahmen 202.1...202.5 gehalten, wobei jede Klemmplatte 220.1...220.5 durch in ihren Randbereichen angeordnete, durchgehende Öffnungen mittels Schrauben mit dem Rand der jeweiligen passförmigen Aufnahmen 202.1...202.5 verschraubt wird. In verschraubtem Zustand wirkt die Unterseite der Klemmplatten 220.1...220.5 mit einem Randbereich der Lagerkörper 214.1...214.5 zusammen und fixiert einerseits die Rolleneinheit 210.1...210.5 in der passförmigen Aufnahme 202.1...202.5 und verhindert andererseits durch Reibschluss ein Verdrehen der Rolleneinheit 210.1...210.5 bezüglich seiner Lagerkörperdrehachse, was insbesondere bei den exzentrisch aufgebauten Rolleneinheiten 210.3, 210.4, 210.5 wichtig ist, da dadurch die eingestellten Vorspannungen der Rolleneinheiten 210.3, 210.4, 210.5 fixiert werden. Die Klemmplatten 220 weisen mittig einen durchgehenden kreisförmigen Ausschnitt 222 auf (ersichtlich in Figur 2), der ein Zusammenwirken des Innensechskant-Schlüssels mit der sechskantigen Innenform des Lagerkörpers 214 der im Rollenbockgehäuse 201 montierten und mittels Klemmplatte 220 fixierten Rolleneinheit 210 ermöglicht. Die Vorspannung kann so während dem Betrieb durch Anlösen der Schrauben 221, ohne Entfernen der Klemmplatten 220 eingestellt werden. Zudem kann im Betrieb der Linearführung 1 eine Rolleneinheit 200 durch Lösen der entsprechenden Schrauben 221 und Entfernen der entsprechenden Klemmplatte 220 ausgebaut werden, ohne dass der Rollenbock 200 von der Flachschiene 100 entfernt werden müsste. Dies wird durch die obig beschriebene Dimensionierung der Rollen 211 und der Lagerkörper 214 erreicht. Um beim Vorspannen die Positionierung der Trageinrichtung 230 möglichst nicht zu beeinflussen sind die zwei exzentrischen auf eine Hauptfläche 102 der Flachschiene 100 wirkenden Rolleneinheiten 210 in dieser Ausführung nebeneinander angeordnet und wirken auf dieselbe Hauptfläche 102b der Flachschiene 100. In der Figur 5 ist dargestellt, wie die Rolleneinheiten 210.1, 210.3 durch Abdeckungen 217 verschlossen sind, welche unter anderem das Eindringen von Schmutz von der Aussenseite der Rolleneinheiten 210.1, 210.3 her verhindern. Für den laufenden Betrieb werden alle Rolleneinheiten 210.1...210.5 mit einer solchen Abdeckung 217 verschlossen.

Die Figur 6 zeigt ein Querschnitt entlang der in Figur 2 gezeichneten Ebene B-B, quer zur Schienenlaufrichtung der Flachschiene 100 der Linearführung 1 und durch die Ebene, welche sowohl die Drehachse der Rollen 211.5 wie auch die Drehachse des Bolzens 240 enthält. Die abgebildete Rolleneinheit 210.5 ist in derselben Weise exzentrisch und damit vorspannbar aufgebaut wie die vorstehend beschriebenen exzentrischen Rolleneinheiten 210.3, 210.4, 210.5. Im Unterschied zu den ändern Rolleneinheiten 210.1...210.4 wirkt diese aber auf die Seitenfläche 103a der Flachschiene 100. Damit kann der Rollenbock 200 rechtwinklig zur Flachschienenlängsrichtung und parallel zur Lauffläche 101 mit vorgegebener Kraft vorgespannt werden.

Die beiden in der Figur 6 dargestellten Montageplatten 231, 232 sind an dem Rollenbockgehäuse 201 an den gegenüberliegenden Enden des Bolzens 240 angebracht und mit Loctite gesichert. Der Bolzen 240 lagert mit einem mittleren Abschnitt 241 rotierbar in einer Hülse 242, welche eine Innenbeschichtung aus anodisiertem Aluminium als Gleitlagerung aufweist. Zusätzlich wird zwischen dem Rollenbockgehäuse 201 und den Montageplatten 231, 232 ein Gleitlager eingesetzt, welches gemäss der Figur 6 den gesamten Berührungsbereich zwischen Rollenbockgehäuse 201 und Montageplatten 231, 232 abdeckt, so dass ein Festsitzen der Montageplatten 231, 232 gegenüber dem Rollenbockgehäuse 201 vermieden wird. Der Bolzen 240 weist eine gewisse Presspassung gegenüber der Hülse 242 auf, so dass zur Rotation der Hauptlast um die Drehachse des Bolzens 240 eine gewisse Reibung überwunden werden muss. Damit wird einerseits gewährleistet, dass die Trageinrichtung 230 (mit montierter Hauptlast) pendeln kann, anderseits wird verhindert, dass die Hauptlast zu schwingen beginnt. Um diesen beiden Anforderungen gleichermassen gerecht zu werden, muss die Reibung zwangsläufig in einem Bereich gehalten werden, das heisst, die Reibung soll weder zu hoch noch zu tief eingestellt werden. Statt des Bolzens 240 kann auch eine Schraube eingesetzt werden, welche mit einer Spannmutter die beiden Montageplatten 231, 232 über das Gleitlager gegen das Rollenbockgehäuse 201 mit einstellbarem Druck anzupressen vermag. Damit kann die Reibung der jeweiligen Hauptlast angepasst werden.

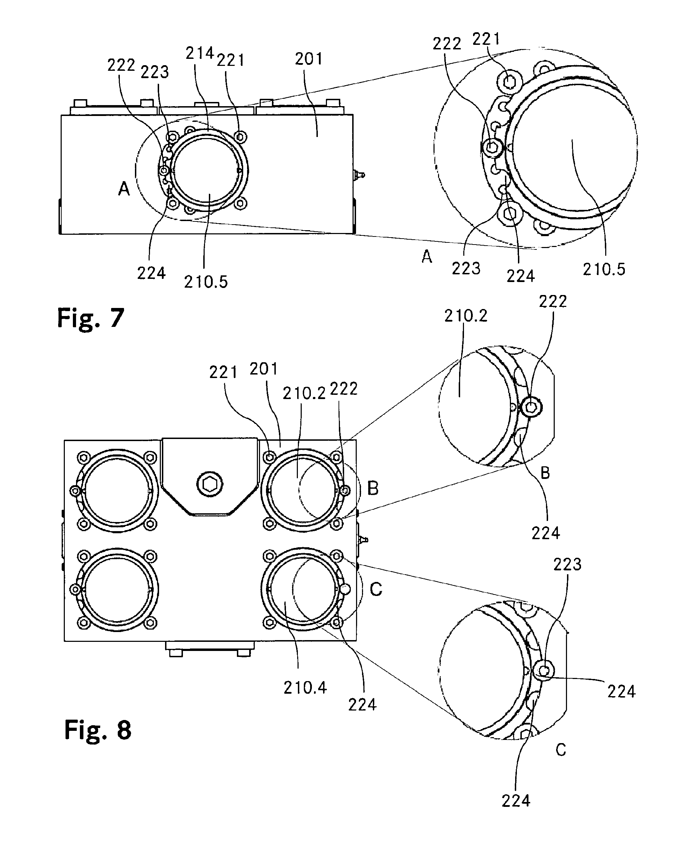

Die Figur 7 zeigt eine schematische Darstellung des Rollenbockes 200 in Richtung der Drehachse der auf eine Seitenfläche der Flachschiene wirkenden Rolle 211.5 (nicht sichtbar) mit einem vergrösserten Ausschnitt A der Rolleneinheit 210.5. In der vorliegenden Ausführungsform weist das Rollenbockgehäuse 201 mehrere regelmässig beabstandete Gewindebohrungen 223 parallel zur Drehachse der Rolle 211.5 im Randbereich des Lagerkörpers 214 zur Aufnahme von Verdrehsicherungsschrauben 222 so auf, dass der Schraubenkopf der Verdrehsicherungsschrauben 222 teilweise in eine entsprechende Kerbe 224 des Lagerkörpers 214 hineinragt und so die Rolleneinheit 210.5 an einer axialen Verdrehung hindert. Durch die Wahl der Gewindebohrung 223 und der Kerbe 224 kann so eine diskret auswählbare Verdrehung der Rolleneinheit 210.5 mit einer exzentrisch gelagerten Rolle 211.5 eingestellt werden.

Die Figur 8 zeigt eine Seitenansicht des Rollenbockes mit vergrösserten Ausschnitten B und C zweier Rolleneinheiten 210.2, 210.4, wobei im Ausschnitt B die montierte Verdrehsicherungsschraube 222, die mit ihrem Schraubenkopf in eine entsprechende Kerbe 222 des Lagerkörpers hineinragt, die Rolleneinheit 210.2 verdrehsichert. Im Ausschnitt C der Figur 8 ist, im Unterschied zum Ausschnitt B keine Verdrehsicherungsschraube in der Bohrung 223, womit die entsprechende Rolleneinheit stufenlos eingestellt werden kann.

Die Erfindung ist nicht auf das dargestellte Ausführungsbeispiel beschränkt. Abhängig von der konkreten Anwendung können beispielsweise die Form, Anzahl und die Anordnung der Montageplatten 231, 232, sowie deren Art der Schwingungsdämpfung verändert sein. Eine andere Möglichkeit wäre nur eine Montageplatte 231 an dem mittigen Abschnitt 241 des Bolzens 240 anzubringen, wobei die Lagerung im Rollenbockgehäuse 201 an den gegenüberliegenden Enden des Bolzens 240 erfolgen würde. Man könnte auch den in Figur 6 dargestellten Bolzen 240 durch ein rohrartiges Element oder durch ein Kugelgelenk ersetzen.

Auch die Befestigung der Hauptlast kann anstatt über Schrauben zum Beispiel auch mittels Schnappverschlüssen oder ähnlichem erfolgen. Je nach Einsatzzweck können auch eine andere Anzahl anders angeordneter Rollen 211 auf die jeweiligen Hauptflächen 102a, 102b sowie auf die Seitenflächen 103a, 103b der Flachschiene 100 wirken, wobei bei einer anderen Anordnung und/oder einer anderen Anzahl Rollen eine symmetrische Anordnung zwecks Kräfteverteilung auf die Rollen 211 vorteilhaft, aber nicht zwingend ist. Die in Figur 5 oder 6 dargestellten Lagerkörper 214 müssen nicht zwingend in der beschriebenen und gezeichneten Form vorliegen. Auch müssen sie nicht alle bis auf ihre Exzentrizität identisch aufgebaut sein, sondern können unter sich weitere Unterschiede aufweisen. Zusätzlich kann der Rollenbock 200 mit einem Bremssystem versehen sein, welches mit der Schiene oder mit einer anderen nicht offenbarten Einrichtung zusammenwirkt.

Zusammenfassend ist festzustellen, dass durch die Erfindung eine Linearführung geschaffen wird, welche Unebenheiten einer Schiene in Schienenlängsrichtung aufnehmen kann, ohne dass die Laufeigenschaften oder die Positionierungsgenauigkeit der Führung sowie der an der Führung befestigten Hauptlast negativ beeinflusst werden.

## Patentansprüche

1. Linearführung umfassend eine Flachschiene (100) und einen mit der Flachschiene (100) zusammenwirkenden Rollenbock (200), wobei der Rollenbock (200) und die Flachschiene (100) relativ zueinander in Laufrichtung verschiebbar sind, **dadurch gekennzeichnet, dass** der Rollenbock (200) eine Trageinrichtung (230) für eine Hauptlast umfasst, welche über eine rechtwinklig zur Laufrichtung und parallel zur Lauffläche (101) liegende Drehachse beweglich am Rollenbock (200) gelagert ist.

2. Linearführung nach Anspruch 1, **dadurch gekennzeichnet, dass** der Rollenbock (200) mindestens vier Rollen (211.1 ... 211.4) umfasst, wobei jeweils mindestens zwei der Rollen (211.1, 211.2) auf eine erste Hauptfläche (1 02a) der Flachschiene (100) und zwei Rollen (211.3, 211.4) auf eine zweite, der ersten Hauptfläche (102a) gegenüberliegende Hauptfläche (102b) der Flachschiene (100), jeweils paarweise gegenüberliegend wirken.

3. Linearführung nach Anspruch 1 oder 2, **dadurch gekennzeichnet, dass** der Rollenbock (200) mindestens eine weitere Rolle (211.5) umfasst, die auf eine Seitenfläche (103a) der Flachschiene (100) wirkt.

4. Linearführung nach Anspruch 3, **dadurch gekennzeichnet, dass** die Rotationsachse der einzelnen, auf die Seitenfläche (103a) der Flachschiene (100) wirkenden Rolle (211.5) mit der Drehachse in einer Ebene liegt, wobei die Ebene senkrecht zur Laufrichtung steht.

5. Linearführung nach einem der Ansprüche 1 bis 4, **dadurch gekennzeichnet, dass** ein maximaler sowie ein minimaler Drehwinkel der Trageinrichtungen (230) um die Drehachse im Intervall [-1°; 1°] liegen.

6. Linearführung nach einem der Ansprüche 1 bis 5, **dadurch gekennzeichnet, dass** die Drehachse durch ein bolzenartiges Element (240) realisiert ist.

7. Linearführung nach Anspruch 6, **dadurch gekennzeichnet, dass** der Rollenbock (200) ein Rollenbockgehäuse (201) umfasst, in welchem das bolzenartige Element (240) drehbar gelagert ist, wobei an gegenüberliegenden Enden des bolzenartigen Elements Montageplatten (231, 232) der Trageinrichtung (230) angebracht sind.

8. Linearführung nach Anspruch 7, **dadurch gekennzeichnet, dass** die Hauptlast durch Schrauben rechtwinklig zur Richtung der Drehachse und der Laufrichtung an den Montageplatten (231, 232) befestigbar ist.

9. Linearführung nach Anspruch 7 oder 8, **dadurch gekennzeichnet, dass** jeweils ein Gleitlager zwischen dem Rollenbockgehäuse (201) und den Montageplatten (231, 232) angebracht ist.

10. Linearführung (1) nach einem der Ansprüche 7 bis 9, **dadurch gekennzeichnet, dass** Rolleneinheiten (210.1...210.5) in passförmigen Aufnahmen (202.1...202.5) des Rollenbockgehäuses (201) auswechselbar aufgenommen sind.

11. Linearführung nach Anspruch 10, **dadurch gekennzeichnet, dass** eine Rolleneinheit (210) im wesentlichen aus einem einseitig geschlossenen zylindrischen Lagerkörper (214) gebildet ist, mit dessen geschlossener Grundfläche ein zylindrischer Lagerbolzen (213) zentrisch oder exzentrisch verbunden ist, wobei die Rolle (211) über ein Schrägkugellager (212) auf dem Lagerbolzen (213) gelagert ist.

12. Linearführung nach einem der Ansprüche 1 bis 11, **dadurch gekennzeichnet, dass** die Rollen (211.1...211.5) im Rollenbock (200) rückseitig und stirnseitig abgestützt sind.

13. Linearführung nach einem der Ansprüche 1 bis 12, **dadurch gekennzeichnet, dass** die Rollen (211.1 ... 211.5) mit vorgegebener Kraft gegenüber der Flachschiene (100) vorspannbar sind.

14. Linearführung nach Anspruch 2, **dadurch gekennzeichnet, dass** mindestens eine der jeweils zwei sich gegenüberliegenden Rollen (211.1, 211.2, 211.3, 211.4) einstellbar exzentrisch gelagert ist.

15. Linearführung nach Anspruch 14, **gekennzeichnet durch** eine Klemmplatte (220), welche in axialer Richtung derart festgezogen werden kann, dass sie reibschlüssig mit einer Aussenseite des Lagerkörpers (214) der Rolleneinheit (210) zusammenwirkt und diese fixiert.

16. Linearführung nach Anspruch 10 und 15, **dadurch gekennzeichnet, dass** die Rolleneinheit (210) von aussen durch entfernen der Klemmplatte (220) demontier- und ersetzbar ist.

17. Rollenbock für eine Linearführung nach einem der Ansprüche 1 bis 16 umfassend eine Trageinrichtung (230) für eine Hauptlast **dadurch gekennzeichnet, dass** der Rollenbock (200) mit einer Flachschiene (100) zusammenwirken kann, wobei der Rollenbock (200) eine Trageinrichtung (230) für eine Hauptlast umfasst, welche über eine rechtwinklig zur Laufrichtung und parallel zur Lauffläche (101) einer Flachschiene (100) liegende Drehachse beweglich am Rollenbock (200) gelagert ist.
